# EUROPEAN PATENT APPLICATION

(11) **EP 4 667 976 A1**
(43) Date of publication of application: **24.12.2025**
(21) Application number: 24756272.1
(22) Date of filing: 08.02.2024
(51) Int. Cl.: G01S 19/23

(54) **GNSS MEASUREMENT METHOD AND APPARATUS, AND DEVICE**

(30) Priority: 15.02.2023 CN 202310121218
(71) Applicant: Spreadtrum Semiconductor (Nanjing) Co., Ltd., Nanjing, Jiangsu 210000 (CN)
(72) Inventor: LEI, Zhenzhu, Nanjing, Jiangsu 210000 (CN)
(74) Representative: Vossius & Partner Patentanwälte Rechtsanwälte mbB
(86) International application number: PCT/CN2024/076849
(87) International publication number: WO 2024/169899

(57) **Abstract**

A GNSS measurement method, apparatus, and device. The method includes: a terminal device (101) receives (301) a medium access control control element (MAC CE) sent by a network device (102), the MAC CE being used to trigger the terminal device (101) to perform GNSS measurement, determines (302) a time-domain starting position of a GNSS measurement gap according to a first-in-sequence effective time slot of the MAC CE, and performs GNSS measurement within the measurement gap. In this way, the terminal device (101) can accurately determine the GNSS measurement gap according to the first-in-sequence effective time slot of the MAC CE and perform GNSS measurement within the measurement gap. This can meet the requirement of measuring the position information of the terminal device (101) in the connected state and ensure normal data transmission.

## Description

The present application claims priority to Chinese Patent Application No. 2023101212181, filed with the China National Intellectual Property Administration on February 15, 2023 and entitled "GNSS MEASUREMENT METHOD, APPARATUS, AND DEVICE", which is incorporated herein by reference in its entirety.

### TECHNICAL FIELD

The present disclosure relates to the field of communications and, in particular, to a GNSS measurement method, apparatus, and device.

### BACKGROUND

In satellite communication, considering the complexity of an Internet of Things terminal device, the Internet of Things terminal device cannot perform global navigation satellite system (Global Navigation Satellite System, GNSS) measurement and data transmission simultaneously. That is, the GNSS measurement and the data transmission need to be separated in terms of time. How to implement the GNSS measurement in a connected-state terminal device is a problem that needs to be solved currently.

### SUMMARY

The present application provides a GNSS measurement method, apparatus, and device to implement the measurement of position information of a terminal device in a connected state and ensure normal data transmission.

In a first aspect, an embodiment of the present application provides a GNSS measurement method, including:
receiving a medium access control control element (MAC CE) sent by a network device; where the MAC CE is used to trigger a terminal device to perform GNSS measurement;
determining a time-domain starting position of a GNSS measurement gap according to a first-in-sequence effective time slot of the MAC CE, and performing GNSS measurement within the measurement gap.

In a possible implementation, the first-in-sequence effective time slot is determined according to a sending-ending time slot of a hybrid automatic repeat request acknowledgement (HARQ-ACK) corresponding to the MAC CE and an activation delay; where the activation delay is a pre-configured time delay value and/or a protocol-specified time delay value. In this way, the terminal device determines the first-in-sequence effective time slot based on the sending-ending time slot of the HARQ-ACK and the activation delay, which can achieve the rapid determination of the first-in-sequence effective time slot.

In a possible implementation, the first-in-sequence effective time slot is after the sending-ending time slot of the HARQ-ACK, and a time interval between the first-in-sequence effective time slot and the sending-ending time slot of the HARQ-ACK is equal to the activation delay.

In a possible implementation, the time-domain starting position of the GNSS measurement gap is the first-in-sequence effective time slot corresponding to the MAC CE. In this way, the terminal device uses the first-in-sequence effective time slot corresponding to the MAC CE as the time-domain starting position of the GNSS measurement gap, which can improve the rationality and accuracy of determining the GNSS measurement gap.

In a possible implementation, the time-domain starting position of the GNSS measurement gap is determined according to the first-in-sequence effective time slot corresponding to the MAC CE and a pre-configured time offset.

In a possible implementation, the time-domain starting position of the GNSS measurement gap is after the first-in-sequence effective time slot corresponding to the MAC CE, and a time interval between the time-domain starting position of the GNSS measurement gap and the first-in-sequence effective time slot corresponding to the MAC CE is equal to the pre-configured time offset. In this way, the terminal device postpones the first-in-sequence effective time slot corresponding to the MAC CE by the pre-configured time offset, and uses it as the time-domain starting position of the GNSS measurement gap, which can improve the rationality and accuracy of determining the GNSS measurement gap.

In a possible implementation, the terminal device is further configured to receive configuration information sent by the network device, where the configuration information includes parameters of the GNSS measurement gap. In this way, the terminal device receives the configuration information which is sent by the network device and which includes the parameters of the GNSS measurement gap. The configuration manner is more flexible, improving the flexibility of determining the GNSS measurement gap subsequently.

In a possible implementation, the parameters of the GNSS measurement gap include a starting position of the measurement gap, a cycle size of the measurement gap, and a time length of the measurement gap.

In a possible implementation, the GNSS measurement gap is a first-in-sequence measurement gap whose starting position is not earlier than the first-in-sequence effective time slot corresponding to the MAC CE. In this way, the terminal device uses the first-in-sequence measurement gap whose starting position is not earlier than the first-in-sequence effective time slot as the GNSS measurement gap. This can improve the flexibility and accuracy of determining the GNSS measurement gap, and thus ensure the rapid acquisition of the position information of the terminal device in the connected state.

In a possible implementation, the GNSS measurement gap is a first-in-sequence measurement gap whose starting position is not earlier than the first-in-sequence effective time slot corresponding to the MAC CE plus a pre-configured time offset. In this way, the terminal device uses the first-in-sequence measurement gap whose starting position is not earlier than the first-in-sequence effective time slot plus the pre-configured time offset as the GNSS measurement gap. This can improve the flexibility and accuracy of determining the GNSS measurement gap, and thus ensure the rapid acquisition of the position information of the terminal device in the connected state and ensure the stable data transmission.

In a possible implementation, the GNSS measurement gap is in an inactive state before the terminal device receives the MAC CE. In this way, the embodiment of the present application can not only ensure the normal data transmission, but also meet the requirement of measuring the position information of the terminal device in the connected state.

In a second aspect, an embodiment of the present application provides a GNSS measurement apparatus, including:
a receiving module, configured to receive a medium access control control element (MAC CE) sent by a network device; where the MAC CE is used to trigger a terminal device to perform GNSS measurement;
a measurement module, configured to determine a time-domain starting position of a GNSS measurement gap according to a first-in-sequence effective time slot of the MAC CE, and perform GNSS measurement within the measurement gap.

In a possible implementation, the first-in-sequence effective time slot is determined according to a sending-ending time slot of a hybrid automatic repeat request acknowledgement (HARQ-ACK) corresponding to the MAC CE and an activation delay; where the activation delay is a pre-configured time delay value and/or a protocol-specified time delay value.

In a possible implementation, the first-in-sequence effective time slot is after the sending-ending time slot of the HARQ-ACK, and a time interval between the first-in-sequence effective time slot and the sending-ending time slot of the HARQ-ACK is equal to the activation delay.

In a possible implementation, the time-domain starting position of the GNSS measurement gap is the first-in-sequence effective time slot corresponding to the MAC CE.

In a possible implementation, the time-domain starting position of the GNSS measurement gap is determined according to the first-in-sequence effective time slot corresponding to the MAC CE and a pre-configured time offset.

In a possible implementation, the time-domain starting position of the GNSS measurement gap is after the first-in-sequence effective time slot corresponding to the MAC CE, and a time interval between the time-domain starting position of the GNSS measurement gap and the first-in-sequence effective time slot corresponding to the MAC CE is equal to the pre-configured time offset.

In a possible implementation, the terminal device is further configured to receive configuration information sent by the network device, where the configuration information includes parameters of the GNSS measurement gap.

In a possible implementation, the parameters of the GNSS measurement gap include a starting position of the measurement gap, a cycle size of the measurement gap, and a time length of the measurement gap.

In a possible implementation, the GNSS measurement gap is a first-in-sequence measurement gap whose starting position is not earlier than the first-in-sequence effective time slot corresponding to the MAC CE.

In a possible implementation, the GNSS measurement gap is a first-in-sequence measurement gap whose starting position is not earlier than the first-in-sequence effective time slot corresponding to the MAC CE plus a pre-configured time offset.

In a possible implementation, the GNSS measurement gap is in an inactive state before the terminal device receives the MAC CE.

In a third aspect, an embodiment of the present application provides a GNSS measurement device, including: a processor and a memory; where
the memory stores computer execution instructions;
the processor executes the computer execution instructions stored in the memory to implement the method according to any of the first aspect.

In a fourth aspect, an embodiment of the present application provides a computer-readable storage medium, where computer execution instructions are stored in the computer-readable storage medium, and the computer execution instructions are used to implement the method according to any of the first aspect when being executed.

In a fifth aspect, an embodiment of the present application provides a computer program product including a computer program, and when the computer program is executed, the method according to any of the first aspect is implemented.

In a sixth aspect, an embodiment of the present application provides a chip, where a computer program is stored on the chip, and when the computer program is executed by the chip, the method according to any of the first aspect is implemented.

In a seventh aspect, an embodiment of the present application provides a chip module, where a computer program is stored on the chip module, and when the computer program is executed by the chip module, the method according to any of the first aspect is implemented.

With the GNSS measurement method, apparatus, and device provided in the embodiments of the present application, the terminal device receives the medium access control control element (MAC CE) sent by the network device, where the MAC CE is used to trigger the terminal device to perform GNSS measurement; the terminal device determines the time-domain starting position of the GNSS measurement gap according to the first-in-sequence effective time slot of the MAC CE, and performs GNSS measurement within the measurement gap. In this way, the terminal device can accurately determine the GNSS measurement gap according to the first-in-sequence effective time slot of the MAC CE and perform GNSS measurement within the measurement gap. This can meet the requirement of measuring the position information of the terminal device in the connected state and ensure the normal data transmission.

### BRIEF DESCRIPTION OF DRAWINGS

The accompanying drawings that form a part of the present disclosure are used to provide a further understanding of the present disclosure. The illustrative embodiments of the present disclosure and their descriptions are used to explain the present disclosure and do not constitute an improper limitation to the present disclosure. In the accompanying drawings:
FIG. 1 is a schematic diagram of an application scenario provided in an embodiment of the present application;
FIG. 2 is a schematic diagram of data transmission of a terminal device during satellite communication in the related art;
FIG. 3 is a schematic flowchart of a GNSS measurement method provided in an embodiment of the present application;
FIG. 4 is a schematic diagram of GNSS measurement gap determination provided in an embodiment of the present application;
FIG. 5 is another schematic diagram of GNSS measurement gap determination provided in an embodiment of the present application;
FIG. 6 is another schematic diagram of GNSS measurement gap determination provided in an embodiment of the present application;
FIG. 7 is another schematic diagram of GNSS measurement gap determination provided in an embodiment of the present application;
FIG. 8 is a schematic structural diagram of a GNSS measurement apparatus provided in an embodiment of the present application;
FIG. 9 is a schematic structural diagram of a GNSS measurement device provided in an embodiment of the present application.

### DESCRIPTION OF EMBODIMENTS

Hereinafter, only some exemplary embodiments are briefly described. As those skilled in the art can recognize, the described embodiments may be modified in various different ways without departing from the spirit or scope of the present invention. Therefore, the accompanying drawings and descriptions are considered to be exemplary in nature rather than restrictive.

In the description of the present invention, it should be understood that the orientation or positional relationship indicated by a term, such as "center", "longitudinal", "transverse", "length", "width", "thickness", "upper", "lower", "front", "rear", "left", "right", "vertical", "horizontal", "top", "bottom", "inner", "outer", "clockwise", "counterclockwise", etc., is based on the orientation or positional relationship shown in the drawings, which is only for the convenience of describing the present invention and simplifying the description, rather than indicating or implying that the apparatus or element referred to must have a specific orientation or be constructed and operated in a specific orientation, and thus should not be understood as a limitation to the present invention. In addition, the terms "first" and "second" are only used for descriptive purposes, and cannot be understood as indicating or implying relative importance or implicitly indicating the quantity of the indicated technical features. Thus, the features defined with "first" and "second" may explicitly or implicitly include one or more of such features. In the description of the present invention, the meaning of "multiple" is two or more, unless otherwise clearly and specifically defined.

In the description of the present invention, it should be noted that, unless otherwise clearly specified and limited, the terms "install", "connect" and "link" should be understood in a broad sense. For example, it may be a fixed connection, a detachable connection, or an integral connection; it may be a mechanical connection, an electrical connection, or communication with each other; it may be a direct connection, an indirect connection through an intermediate medium, an internal connection of two elements, or an interaction relationship between two elements.

For those of ordinary skill in the art, the specific meanings of the above terms in the present invention can be understood according to specific situations.

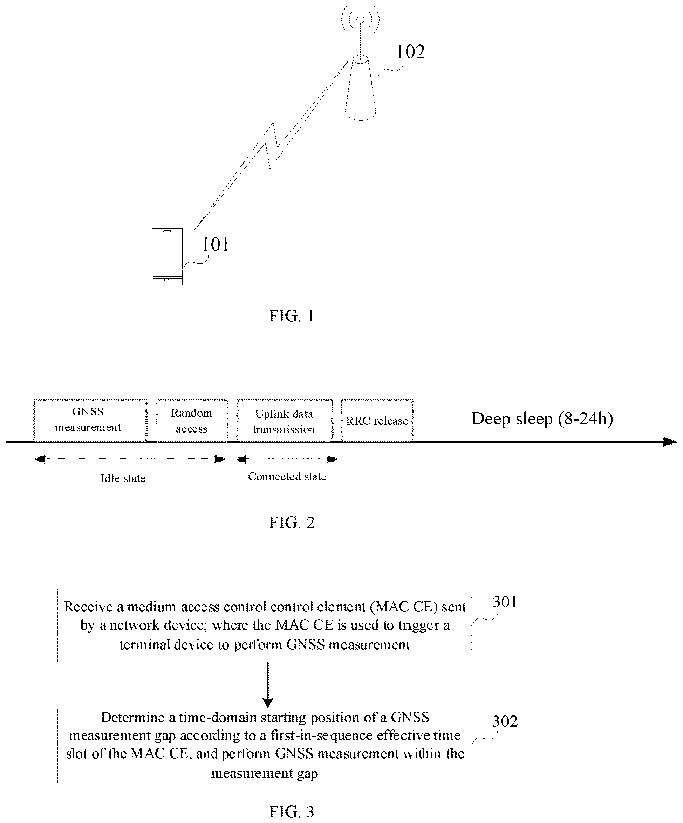

FIG. 1 is a schematic diagram of an application scenario provided in an embodiment of the present application. Please refer to FIG. 1, a terminal device 101 and a network device 102 are included.

Here, the terminal device 101 may further be referred to as User Equipment (User Equipment, UE), access terminal, user unit, user station, mobile station, mobile, remote station, remote terminal, mobile device, user terminal, terminal, wireless communication device, user agent, or user apparatus, etc. The terminal device 101 may specifically be a device that provides voice/data connectivity to a user, such as a handheld device with a wireless connection function, a vehicle-mounted device, etc. Specifically, the terminal device may be: a mobile phone (Mobile Phone), a tablet computer (Pad), a computer with a wireless transceiving function (such as a notebook computer, a palmtop computer, etc.), a mobile Internet device (Mobile Internet Device, MID), a virtual reality (Virtual Reality, VR) device, an augmented reality (Augmented Reality, AR) device, a wireless terminal in industrial control (Industrial Control), a wireless terminal in self driving (Self Driving), a wireless terminal in remote medical (Remote Medical), a wireless terminal in smart grid (Smart Grid), a wireless terminal in transportation safety (Transportation Safety), a wireless terminal in smart city (Smart City), a wireless terminal in smart home (Smart Home), a cellular phone, a cordless phone, a session initiation protocol (Session Initiation Protocol, SIP) phone, a wireless local loop (Wireless Local Loop, WLL) station, a personal digital assistant (Personal Digital Assistant, PDA), a handheld device with a wireless communication function, a computing device with a wireless communication function or other processing devices connected to a wireless modem, a vehicle-mounted device, a wearable device, a terminal device in the 5th generation mobile communication technology (5G) network, or a terminal device in a future evolved public land mobile network (Public Land Mobile Network, PLMN), etc.

Here, the wearable device, further referred to as a wearable smart device, is the general term for devices that can be worn and that are developed through intelligent design of daily wear using wearable technology, such as glasses, gloves, watches, clothing, shoes, etc. A wearable device is a portable device that is directly worn on the body or integrated into the user's clothes or accessories. A wearable device is not only a hardware device but also realizes powerful functions through software support, data interaction, and cloud interaction. Broadly-defined wearable smart devices include those with full functions and large sizes that can realize complete or partial functions without relying on smartphones, such as smart watches or smart glasses, and those that only focus on a certain type of application functions and need to be used in conjunction with other devices such as smartphones, such as various smart bracelets and smart jewelry for physical sign monitoring, etc.

In addition, the terminal device 101 may further be a terminal device in the Internet of Things (Internet of Things, IoT) system. IoT is an important part of the future development of information technology, and its main technical characteristic is to connect objects to the network through communication technology, so as to achieve intelligent networking of human-machine interconnection and object-object interconnection. IoT technology can achieve massive connections, deep coverage, and terminal power saving through, for example, narrow band (Narrow Band, NB) technology.

In addition, the terminal device 101 may further include sensors for intelligent printers, train detectors, gas stations, etc. The main functions include collecting data (for some terminal devices), receiving control information and downlink data from a network device, and sending electromagnetic waves to transmit uplink data to the network device. The embodiments of the present application do not limit the specific type or name of the terminal device 101.

The network device 102 may be any device with a wireless transceiving function. The device includes but is not limited to: an evolved node B (evolved Node B, eNB), a radio network controller (Radio Network Controller, RNC), a node B (Node B, NB), a base station controller (Base Station Controller, BSC), a base transceiver station (Base Transceiver Station, BTS), a home base station (e.g., Home Evolved Node B, or Home Node B, HNB), a baseband unit (Baseband Unit, BBU), an access point (Access Point, AP) in a wireless fidelity (Wireless Fidelity, WiFi) system, a wireless relay node, a wireless backhaul node, a transmission point (Transmission Point, TP), or a transmission and reception point (Transmission and Reception Point, TRP), etc. The device may further be a gNB in the 5G such as new radio (New Radio, NR) system, or a transmission point (TRP or TP), or one antenna panel or a set of antenna panels (including multiple antenna panels) of a base station in the 5G system, or may also be a network node constituting a gNB or a transmission point, such as a baseband unit (BBU), or a distributed unit (Distributed Unit, DU), etc.

In some deployments, the gNB may include a centralized unit (Centralized Unit, CU) and a DU. The gNB may further include an active antenna unit (Active Antenna Unit, AAU). The CU implements part of the functions of the gNB, and the DU implements part of the functions of the gNB. For example, the CU is responsible for processing non-real-time protocols and services, and implementing the functions of the radio resource control (Radio Resource Control, RRC) layer and the packet data convergence protocol (Packet Data Convergence Protocol, PDCP) layer. The DU is responsible for processing physical layer protocols and real-time services, and implementing the functions of the radio link control (Radio Link Control, RLC) layer, the medium access control (Medium Access Control, MAC) layer, and the physical (Physical, PHY) layer. The AAU implements part of the physical layer processing functions, radio frequency processing, and related functions of the active antenna. Since the information of the RRC layer will eventually become the information of the PHY layer, or is derived from the information of the PHY layer, in this architecture, high-layer signaling, such as RRC layer signaling, can also be considered as sent by the DU, or sent by the DU + AAU. It can be understood that the network device may be a device including one or more of a CU node, a DU node, and an AAU node. In addition, the CU can be classified as a network device in the radio access network (Radio Access Network, RAN) or can be classified as a network device in the core network (Core Network, CN). The embodiments of the present application do not limit the specific type or name of the network device 102 either.

The following describes the related technologies involved in the embodiments of the present application.

### 1. Satellite Internet of Things

In a satellite Internet of Things system, the operating orbit altitude of satellites ranges from several hundred to tens of thousands of kilometers. Exemplarily, Table 1 shows the altitudes of various satellite orbits and related parameters. Taking a geosynchronous satellite serving as a relay as an example, the satellite orbit altitude is approximately 35,786 kilometers (km), and the round-trip propagation delay between a terminal device and a network device can reach 540 milliseconds (ms). In the Low Earth Orbit satellite scenario, due to the rapid movement of the satellite relative to the terminal device, there is a very large Doppler frequency shift between the terminal device and the satellite, as well as between the satellite and the base station. Taking a 600km Low Earth Orbit satellite (LEO-600) as an example, the satellite speed can reach 7.56 kilometers per second (km/s). In the case of a low elevation angle, the Doppler frequency offset can reach more than 20 parts per million (parts per million, ppm). In addition, due to the rapid movement of the satellite relative to the terminal device, the propagation delay between the terminal device and the network device will also change rapidly.

Therefore, how to maintain uplink-downlink time-frequency synchronization is a major problem that needs to be solved in the satellite Internet of Things communication system.

**Table 1**

| Platform | Altitude range | Orbit | Typical beam coverage diameter |
|---|---|---|---|
| Low Earth Orbit (LEO) satellite | 300-1,500km | Circular orbit around the Earth | 100-1,000km |
| Medium Earth Orbit (MEO) satellite | 7,000-25,000km | | 100-1,000km |
| Geostationary Earth Orbit (GEO) satellite | 35,786km | Stationary relative to a certain position area on the Earth | 200-3,500km |
| Unmanned system platform (including HAPS) | 8-50km (20km for HAPS) | | 5-200km |
| High Elliptical Orbit (HEO) satellite | 400-50,000km | Elliptical orbit around the Earth | 200-3,500km |

### 2. GNSS measurement

In the satellite Internet of Things system, obtaining its own position information is a primary condition for a terminal device to perform data transmission. Therefore, it is generally assumed that the satellite Internet of Things terminal device has GNSS capability, and the terminal device needs to perform GNSS measurement in order to obtain its own position information. Since the Internet of Things terminal device has relatively high requirements for battery life, it is not appropriate for the terminal device to perform GNSS measurement frequently, otherwise, the battery life of the terminal device will be severely shortened. In the Internet of Things satellite communication (Non-Terrestrial Networks, NTN) in the 3rd generation partnership project (3rd Generation Partnership Project, 3GPP) standard Release 17 (Release 17, R17), as only sporadic and short-term data services are considered, the terminal device does not need to be in the RRC connected state for a long time. Therefore, the terminal device only needs to complete GNSS measurement to determine GNSS position information before entering the RRC connected state. In this way, after entering the RRC connected state, the terminal device does not need to perform GNSS measurement again. If the GNSS position information becomes outdated during the RRC connected state, the terminal device needs to exit the RRC connected state and enter the idle state to re-obtain the GNSS positioning information. In order to ensure the accuracy of the GNSS positioning information during data transmission, 3GPP R17 IoT NTN defines a valid duration for the GNSS position information. Generally, after the terminal device obtains the GNSS position information through the GNSS measurement, the terminal device and the network consider the GNSS position information to be valid (i.e., the position information of the terminal device is accurate) during the valid duration. In addition, the terminal device needs to report the valid duration of the GNSS positioning information. The value range of the valid duration of the GNSS positioning information may be {10s, 20s, 30s, 40s, 50s, 60s, 5min, 10min, 15min, 20min, 25min, 30min, 60min, 90min, 120min, infinity (infinity)}.

Exemplarily, FIG. 2 is a schematic diagram of data transmission of a terminal device during satellite communication in the related art. As shown in FIG. 2, in 3GPP R17 IoT NTN, during satellite communication, before a terminal device enters the RRC connected state, that is, when the terminal device is in the idle state, the terminal device performs GNSS measurement to obtain position information of the terminal device; after that, random access is performed, and the terminal device enters the RRC connected state. In the RRC connected state, the terminal device performs data transmission; after that, the terminal device performs RRC release and exits the RRC connected state to enter the deep sleep state. Combining with FIG. 2, it can be seen that the current 3GPP R17 IoT NTN only considers sporadic and short-term data services. The terminal device only needs to complete the GNSS measurement before entering the connected state, and does not need to perform GNSS measurement in the RRC connected state.

### 3. Uplink timing synchronization mechanism in NTN

In the current NTN network, the terminal device is assumed to have GNSS positioning capability. That is, the terminal device can calculate the round trip time (Round Trip Time, RTT) between the position of the terminal device and the serving satellite according to ephemeris information (key orbital parameters of the satellite) and the position information of the terminal device itself (the position is obtained by using GNSS). Based on this assumption, in the current NTN, a timing advance (Timing Advance, TA) value of uplink sending of the terminal device may be determined by the following parameters:
(1) a terminal-device-level TA value that the terminal device may calculate according to its own position information and ephemeris information, i.e., the RTT between the terminal device and the serving satellite;
(2) a public TA value broadcast by the network, i.e., the RTT between the satellite and a reference point;
(3) a TA adjustment value indicated by the network through Msg2/MsgB or medium access control control element (Media Access Control-Control Entity, MAC-CE); where Msg2 is Message 2 in the four-step random access, and MsgB is Message B in the two-step random access; in addition, the TA value does not include this item when the network sends a physical random access channel (Physical Random Access Channel, PRACH);
(4) a fixed compensation value (Offset) indicated by the network, which may be expressed as N_{TA, offset}, etc.

### 4. MAC CE activation delay in NTN

There are various types of MAC-CEs in the current 5G terrestrial communication system, and some of the MAC-CEs do not involve the timing relationship defined in the physical layer specification. Considering the scenario of uplink-downlink frame timing being not aligned on the network device side, it is necessary to enhance the activation delay of MAC-CEs that involve the timing relationship defined in the physical layer specification. Generally speaking, for the MAC-CE timing relationship defined in the physical layer specification, a MAC-CE command is activated or takes effect 3ms after the terminal device sends a hybrid automatic repeat request acknowledgement (Hybrid Automatic Repeat reQuest Acknowledgement, HARQ-ACK) corresponding to a received physical downlink shared channel (Physical Downlink Shared Channel, PDSCH) carrying the MAC-CE command.

In NTN, in the case of uplink-downlink frame timing being aligned on the network device side, the understanding of the activation time of the MAC CEs related to uplink-downlink configuration is consistent between the network device side and the terminal device side. When the uplink-downlink frame timing on the network device side is not aligned, for the activation time of the MAC CE related to the uplink configuration, the understanding is consistent between the terminal device side and the network device side, and no enhancement is required; for the activation time of the MAC CE related to the downlink configuration, the understanding is inconsistent between the terminal device side and the network device side, and enhancement is required. That is, on the basis of the existing activation delay of the MAC CE related to the downlink configuration, K_mac is added, so that the network device and the terminal device have consistent understanding of the activation time of the MAC CE related to the downlink configuration. Assuming that the terminal device sends HARQ-ACK information of a MAC CE regarding downlink configuration (downlink behavior or downlink configuration) in uplink time slot n, the terminal device considers that the activation time of this MAC CE is time slot n+3ms+K_mac.

Here, the value of K_mac may be configured to the terminal device through high-layer signaling, such as through system information or RRC dedicated signaling. Currently, 3GPP supports configuring the value of K_mac to the terminal device through the system information, and the value range of K_mac is 1-512ms. In addition, due to the rapid movement of the satellite, the RTT between the reference point and the network device will also change over time. Therefore, it is necessary to involve an update mechanism for the value of K_mac. Currently, 3GPP has not made specific enhancements for the update of the value of K_mac, and only supports updating the value of K_mac by means of updating through the system information.

In satellite communication, considering the complexity of an Internet of Things terminal, the Internet of Things terminal cannot perform GNSS measurement and data transmission at the same time. That is, the GNSS measurement and the data transmission need to be time-divided (separated in terms of time). In the related art, since the current satellite Internet of Things only considers sporadic and short-term data services, the terminal device only needs to complete GNSS measurement before entering the connected state, and the terminal device does not need to perform GNSS measurement in the RRC connected state. However, in the long-term data transmission service scenario in the future, the terminal device usually needs to perform GNSS measurement in the connected state. At this time, it is necessary to consider how to design the GNSS measurement gap (Gap) in the connected state to ensure that the data transmission and the GNSS measurement are separated in terms of time. The manner of performing GNSS measurement before the connected state and not performing GNSS measurement in the connected state in the related art obviously cannot meet the demand for obtaining position information by the terminal device in the connected state, and cannot ensure the accurate data transmission.

In the embodiments of the present application, a terminal device receives a medium access control control element (MAC CE) sent by a network device, where the MAC CE is used to trigger the terminal device to perform GNSS measurement; the terminal device determines a time-domain starting position of a GNSS measurement gap according to a first-in-sequence effective time slot of the MAC CE, and performs GNSS measurement within the measurement gap. In this way, the terminal device can accurately determine the GNSS measurement gap according to the first-in-sequence effective time slot of the MAC CE and perform GNSS measurement within the measurement gap. This can meet the requirement of measuring position information of the terminal device in the connected state and ensure the normal data transmission.

The solutions shown in the present application are described in detail through specific embodiments below. It should be noted that the following several embodiments can exist independently or be combined with each other. For the same or similar content, it will not be repeated in different embodiments.

In the following, a process of GNSS measurement is illustrated in combination with an embodiment shown in FIG. 3. FIG. 3 is a schematic flowchart of a GNSS measurement method provided in an embodiment of the present application. Please refer to FIG. 3, the GNSS measurement method may include:
S301, receive a medium access control control element (MAC CE) sent by a network device; where the MAC CE is used to trigger a terminal device to perform GNSS measurement;
S302, determine a time-domain starting position of a GNSS measurement gap according to a first-in-sequence effective time slot of the MAC CE, and perform GNSS measurement within the measurement gap.

In the embodiment of the present application, the first-in-sequence effective time slot may refer to the first time slot for the MAC CE to take effect or to be activated, that is, the effective time starting position of the MAC CE that triggers the terminal device to perform GNSS measurement. Specifically, the terminal device may receive the MAC CE sent by the network device to trigger the terminal device to perform GNSS measurement. After that, the terminal device may determine the time-domain starting position of the GNSS measurement gap according to the first-in-sequence effective time slot of the MAC CE, and perform GNSS measurement within the measurement gap to obtain the position information of the terminal device.

In the GNSS measurement method provided in the embodiment of the present application, the terminal device receives the medium access control control element (MAC CE) sent by the network device, where the MAC CE is used to trigger the terminal device to perform GNSS measurement; the terminal device determines the time-domain starting position of the GNSS measurement gap according to the first-in-sequence effective time slot of the MAC CE, and performs GNSS measurement within the measurement gap. In this way, the terminal device can accurately determine the GNSS measurement gap according to the first-in-sequence effective time slot of the MAC CE and perform GNSS measurement within the measurement gap. This can meet the requirement of measuring position information of the terminal device in the connected state and ensure the normal data transmission.

In a possible implementation, the first-in-sequence effective time slot is determined according to a sending-ending time slot of a hybrid automatic repeat request acknowledgement (HARQ-ACK) corresponding to the MAC CE and an activation delay; where the activation delay is a pre-configured time delay value and/or a protocol-specified time delay value.

In the embodiment of the present application, after receiving the MAC CE that triggers the GNSS measurement, the terminal device needs to feedback the HARQ-ACK to the network device. Specifically, the network device triggers the terminal to perform GNSS measurement by sending the MAC CE. After receiving the MAC CE sent by the network, the terminal device needs to send the HARQ-ACK according to the indication of downlink control information scheduling the MAC CE. That is, the downlink control information scheduling the MAC CE will indicate a time slot position where the terminal device sends the HARQ-ACK.

The sending-ending time slot may refer to the ending time slot of the HARQ-ACK sent by the terminal device, and can be represented by time slot n. The activation delay may refer to the pre-configured time delay value or the protocol-specified time delay value, etc. In a possible implementation, the activation delay may include a preset delay and an enhanced delay, where the preset delay may be 3 milliseconds, etc., and the enhanced delay may be the aforementioned K_mac. Of course, the activation delay may also be of other values or include other types of delays. The embodiment of the present application does not limit the specific value and type of the activation delay.

In a possible implementation, the first-in-sequence effective time slot is after the sending-ending time slot of the HARQ-ACK, and a time interval between the first-in-sequence effective time slot and the sending-ending time slot of the HARQ-ACK is equal to the activation delay.

In the embodiment of the present application, the first-in-sequence effective time slot may be determined based on the sending-ending time slot of the MAC CE sent by the terminal device and the activation delay. The first-in-sequence effective time slot is after the sending-ending time slot of the HARQ-ACK sent by the terminal device, and the time interval between the first-in-sequence effective time slot and the sending-ending time slot is equal to the activation delay. Exemplarily, when the sending-ending time slot of the HARQ-ACK sent by the terminal device is time slot n, and the activation delay includes the preset delay (3ms) and the enhanced delay (K_mac), the first-in-sequence effective time slot can be expressed as n+3*2°+K_mac*2° at this time. Here, the coefficient u is a subcarrier spacing coefficient corresponding to a bandwidth part (Bandwidth Part, BWP) where the HARQ-ACK is sent. For example, when the subcarrier spacing is 30KHz, the corresponding u is 1, and when the subcarrier spacing is 60KHz, the corresponding u is 2, and so on. Of course, in addition to the above determination manner, the first-in-sequence effective time slot may also be determined by other calculation methods, which is not limited in the embodiment of the present application.

In a possible implementation, the time-domain starting position of the GNSS measurement gap is the first-in-sequence effective time slot corresponding to the MAC CE.

In the embodiment of the present application, after determining the first-in-sequence effective time slot, the terminal device may directly use the first-in-sequence effective time slot as the time-domain starting position of the GNSS measurement gap, that is, the first-in-sequence time slot for the MAC CE that triggers the GNSS measurement to take effect is used as the starting position of the GNSS measurement gap. Exemplarily, when the sending-ending time slot of the MAC CE sent by the terminal device is time slot n, and the activation delay includes the preset delay (3ms) and the enhanced delay (K_mac), the time-domain starting position of the GNSS measurement gap is the first-in-sequence effective time slot, that is, n+3*2^{u}+K_mac*2^{u}. In this way, by using the first-in-sequence effective time slot as the GNSS measurement gap, the terminal device can achieve the rapid determination of the GNSS measurement gap.

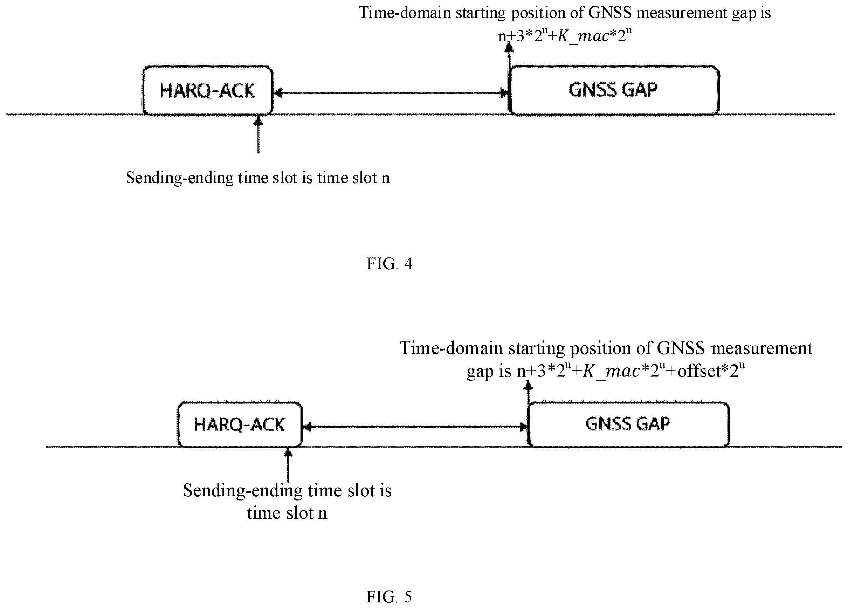

Exemplarily, FIG. 4 is a schematic diagram of GNSS measurement gap determination provided in an embodiment of the present application. As shown in FIG. 4, a sending-ending time slot of HARQ-ACK sent by a terminal device is time slot n. At this time, a time-domain starting position (or starting time slot) of a GNSS measurement gap is n+3*2^{u}+K_mac*2^{u}.

In a possible implementation, the time-domain starting position of the GNSS measurement gap is determined according to the first-in-sequence effective time slot corresponding to the MAC CE and a pre-configured time offset.

In the embodiment of the present application, the pre-configured time offset (offset) may be a pre-configured or protocol-specified time offset. For example, the pre-configured time offset may be configured by the network device. The embodiment of the present application does not limit the specific configuration manner of the pre-configured time offset. After determining the first-in-sequence effective time slot, the terminal device may determine the time-domain starting position of the GNSS measurement gap according to the first-in-sequence effective time slot and the pre-configured time offset. For example, the first-in-sequence effective time slot may be postponed by the pre-configured time offset.

In a possible implementation, the time-domain starting position of the GNSS measurement gap is after the first-in-sequence effective time slot corresponding to the MAC CE, and a time interval between the time-domain starting position of the GNSS measurement gap and the first-in-sequence effective time slot corresponding to the MAC CE is equal to the pre-configured time offset.

In the embodiment of the present application, the terminal device may postpone the first-in-sequence effective time slot by the pre-configured time offset to obtain the time-domain starting position of the GNSS measurement gap. That is, the time-domain starting position of the GNSS measurement gap is after the first-in-sequence effective time slot, and the time interval between the time-domain starting position of the GNSS measurement gap and the first-in-sequence effective time slot is equal to the pre-configured time offset.

For example, when the sending-ending time slot of the HARQ-ACK sent by the terminal device is time slot n, and the activation delay includes the preset delay (3ms) and the enhanced delay (K_mac), while the unit of the pre-configured time offset is time slot, the time-domain starting position of the GNSS measurement gap is n+3*2^{u}+K_mac*2^{u}+offset; while the unit of the pre-configured time offset is millisecond (ms), the time-domain starting position of the GNSS measurement gap can be determined as n+3*2^{u}+K_mac*2^{u}+offset*2^{u} at this time.

Exemplarily, FIG. 5 is another schematic diagram of GNSS measurement gap determination provided in an embodiment of the present application. As shown in FIG. 5, a sending-ending time slot of HARQ-ACK sent by a terminal device is time slot n. The unit of a pre-configured time offset is millisecond. At this time, the terminal device can determine that a time-domain starting position of a GNSS measurement gap is n+3*2^{u}+K_mac*2^{u}+offset*2^{u}.

Both of the above two manners are directly specified by the protocol. The terminal device may use the first-in-sequence effective time slot of the MAC CE as the time-domain starting position of the GNSS measurement gap, or the terminal device may determine the time-domain starting position of the GNSS measurement gap according to the first-in-sequence effective time slot of the MAC CE and the pre-configured time offset. In addition to these two manners, the terminal device may also determine the time-domain starting position of the GNSS measurement gap based on configuration information of the network device and the first-in-sequence effective time slot, which is specifically as follows.

In a possible implementation, the terminal device is further configured to receive configuration information sent by the network device, where the configuration information includes parameters of the GNSS measurement gap.

In a possible implementation, the parameters of the GNSS measurement gap include a starting position of the measurement gap, a cycle size of the measurement gap, and a time length of the measurement gap.

In the embodiment of the present application, the configuration information may refer to pre-configuration information of the network device. The pre-configuration information may include the parameters of the GNSS measurement gap. Each GNSS measurement gap may be used as an inactive GNSS measurement time slot. The parameters of the GNSS measurement gap may include the starting position of the measurement gap, the cycle size of the measurement gap, the time length of the measurement gap, etc. Of course, the parameters of the GNSS measurement gap may further include other parameters, which are not limited in the embodiment of the present application.

Specifically, the terminal device may receive the configuration information sent by the network device, obtain the parameters such as the starting position of the periodic GNSS measurement gap and the time length of the GNSS measurement gap, and then determine the measurement gap corresponding to the GNSS measurement gap based on the first-in-sequence effective time slot of the MAC CE that triggers the GNSS measurement.

In a possible implementation, the GNSS measurement gap is a first-in-sequence measurement gap whose starting position is not earlier than the first-in-sequence effective time slot corresponding to the MAC CE.

In the embodiment of the present application, the terminal device may use the first-in-sequence measurement gap whose starting position is not earlier than the first-in-sequence effective time slot as the GNSS measurement gap. That is, the terminal device may activate the first-in-sequence measurement gap whose starting position is not earlier than the first-in-sequence effective time slot and use it as the GNSS measurement gap, and then the terminal device may use the activated GNSS measurement gap to perform GNSS measurement to obtain position information. In this way, the terminal device determines the GNSS measurement gap based on the configuration information and the first-in-sequence effective time slot, which can improve the flexibility of determining the GNSS measurement gap, and thus ensure the normal data transmission.

For example, when the first-in-sequence effective time slot is n+3*2^{u}+K_mac*2^{u}, since the measurement gap is periodic, the terminal device may use the first-in-sequence measurement gap whose starting position is not earlier than n+3*2^{u}+K_mac*2^{u} as the GNSS measurement gap.

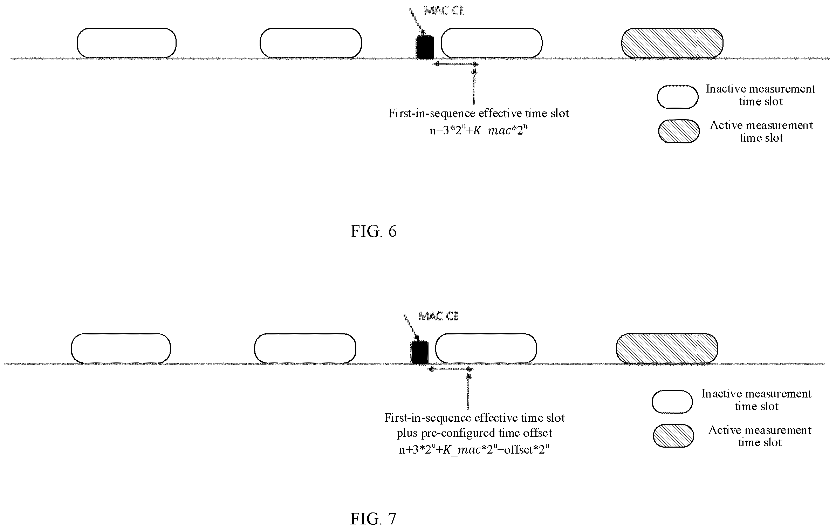

Exemplarily, FIG. 6 is another schematic diagram of GNSS measurement gap determination provided in an embodiment of the present application. As shown in FIG. 6, a terminal device may determine respective starting positions and respective time lengths of measurement time slots according to configuration information. After receiving a MAC CE that triggers GNSS measurement, the terminal device may determine that the first-in-sequence effective time slot is n+3*2^{u}+K_mac*2^{u}. At this time, the terminal device may activate the first-in-sequence measurement gap whose starting position is not earlier than the first-in-sequence effective time slot and use it as a GNSS measurement gap of the terminal device.

In a possible implementation, the GNSS measurement gap is a first-in-sequence measurement gap whose starting position is not earlier than the first-in-sequence effective time slot corresponding to the MAC CE plus a pre-configured time offset.

In the embodiment of the present application, the terminal device may use the first-in-sequence measurement time slot whose starting position is not earlier than the first-in-sequence effective time slot plus the pre-configured time offset as the GNSS measurement gap. That is, the terminal device may activate the first-in-sequence measurement gap whose starting position is not earlier than the first-in-sequence effective time slot plus the pre-configured time offset and use it as the GNSS measurement gap, and then the terminal device may use the activated GNSS measurement gap to perform GNSS measurement to obtain position information. In this way, the terminal device determines the GNSS measurement gap based on the configuration information, the first-in-sequence effective time slot, and the pre-configured time offset, which can improve the flexibility of determining the GNSS measurement gap.

For example, when the first-in-sequence effective time slot is n+3*2^{u}+K_mac*2^{u}, while the unit of the pre-configured time offset is time slot, the terminal device may use the first-in-sequence measurement gap whose starting position is not earlier than n+3*2^{u}+K_mac*2^{u}+offset as the GNSS measurement gap; while the unit of the pre-configured time offset is millisecond, the terminal device may use the first-in-sequence measurement gap whose starting position is not earlier than n+3*2^{u}+K_mac*2^{u}+offset*2^{u} as the GNSS measurement gap.

Exemplarily, FIG. 7 is another schematic diagram of GNSS measurement gap determination provided in an embodiment of the present application. As shown in FIG. 7, a terminal device may determine respective starting positions and respective time lengths of measurement time slots according to configuration information. After receiving a MAC CE that triggers GNSS measurement, the terminal device may determine that the first-in-sequence effective time slot is n+3*2^{u}+K_mac*2^{u}. At this time, the terminal device may activate the first-in-sequence measurement gap whose starting position is not earlier than a sum of the first-in-sequence effective time slot and the pre-configured time offset as a GNSS measurement gap of the terminal device.

In a possible implementation, the GNSS measurement gap is in an inactive state before the terminal device receives the MAC CE.

In the embodiment of the present application, before the terminal device receives the MAC CE that is sent by the network device and triggers the GNSS measurement, the periodic GNSS measurement gaps are in the inactive state, that is, the GNSS measurement gaps are not effective, and the terminal device can still perform data transmission in the inactive GNSS measurement gaps. After the terminal device receives the MAC CE that is sent by the network device and triggers the GNSS measurement, the terminal device may activate the determined measurement gap as a GNSS measurement gap, and use the GNSS measurement gap to perform GNSS measurement to obtain the position information. In this way, through the switching of the GNSS activation state, not only the normal data transmission of the terminal device can be ensured, but also the requirement of measuring the position information of the terminal device in the connected state can be met, further ensuring the reliable data transmission.

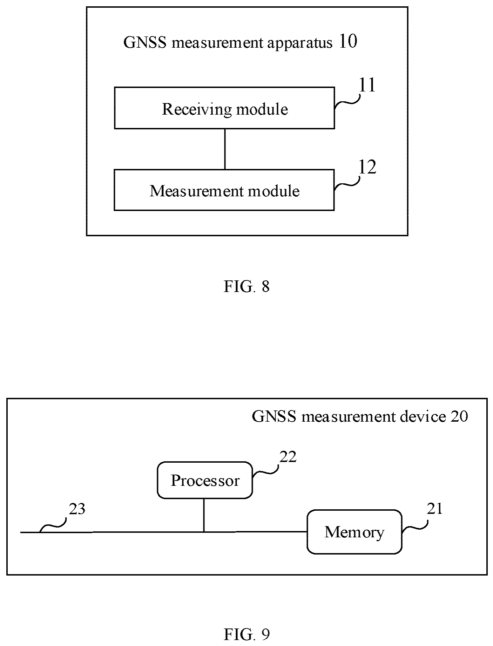

FIG. 8 is a schematic structural diagram of a GNSS measurement apparatus provided in an embodiment of the present application. Please refer to FIG. 8, the GNSS measurement apparatus 10 may include:
a receiving module 11, configured to receive a medium access control control element (MAC CE) sent by a network device; where the MAC CE is used to trigger a terminal device to perform GNSS measurement;
a measurement module 12, configured to determine a time-domain starting position of a GNSS measurement gap according to a first-in-sequence effective time slot of the MAC CE, and perform GNSS measurement within the measurement gap.

In a possible implementation, the first-in-sequence effective time slot is determined according to a sending-ending time slot of a hybrid automatic repeat request acknowledgement (HARQ-ACK) corresponding to the MAC CE and an activation delay; where the activation delay is a pre-configured time delay value and/or a protocol-specified time delay value.

In a possible implementation, the first-in-sequence effective time slot is after the sending-ending time slot of the HARQ-ACK, and a time interval between the first-in-sequence effective time slot and the sending-ending time slot of the HARQ-ACK is equal to the activation delay.

In a possible implementation, the time-domain starting position of the GNSS measurement gap is the first-in-sequence effective time slot corresponding to the MAC CE.

In a possible implementation, the time-domain starting position of the GNSS measurement gap is determined according to the first-in-sequence effective time slot corresponding to the MAC CE and a pre-configured time offset.

In a possible implementation, the time-domain starting position of the GNSS measurement gap is after the first-in-sequence effective time slot corresponding to the MAC CE, and a time interval between the time-domain starting position of the GNSS measurement gap and the first-in-sequence effective time slot corresponding to the MAC CE is equal to the pre-configured time offset.

In a possible implementation, the terminal device is further configured to receive configuration information sent by the network device, where the configuration information includes parameters of the GNSS measurement gap.

In a possible implementation, the parameters of the GNSS measurement gap include a starting position of the measurement gap, a cycle size of the measurement gap, and a time length of the measurement gap.

In a possible implementation, the GNSS measurement gap is a first-in-sequence measurement gap whose starting position is not earlier than the first-in-sequence effective time slot corresponding to the MAC CE.

In a possible implementation, the GNSS measurement gap is a first-in-sequence measurement gap whose starting position is not earlier than the first-in-sequence effective time slot corresponding to the MAC CE plus a pre-configured time offset.

In a possible implementation, the GNSS measurement gap is in an inactive state before the terminal device receives the MAC CE.

The GNSS measurement apparatus 10 provided in the embodiment of the present application can execute the technical solutions shown in the above method embodiments. The implementation principles and beneficial effects thereof are similar, and will not be elaborated here. The GNSS measurement apparatus 10 may specifically be a chip, a chip module, etc., which is not limited in the embodiment of the present application.

FIG. 9 is a schematic structural diagram of a GNSS measurement device provided in an embodiment of the present application. Please refer to FIG. 9, the GNSS measurement device 20 may include: a memory 21 and a processor 22. Exemplarily, the memory 21, the processor 22, and respective parts are interconnected through a bus 23.

The memory 21 is configured to store program instructions.

The processor 22 is configured to execute the program instructions stored in the memory to implement the GNSS measurement method shown in the above embodiments.

The GNSS measurement device shown in the embodiment of FIG. 9 can execute the technical solutions shown in the above method embodiments. The implementation principles and beneficial effects thereof are similar, and will not be elaborated here.

An embodiment of the present application provides a computer-readable storage medium, where computer-executable instructions are stored in the computer-readable storage medium, and the computer-executable instructions are used to implement the above-mentioned GNSS measurement method when being executed by a processor.

An embodiment of the present application may further provide a computer program product including a computer program, and when the computer program is executed by a processor, the above-mentioned GNSS measurement method may be implemented.

An embodiment of the present application provides a chip, where a computer program is stored on the chip, and when the computer program is executed by the chip, the above-mentioned GNSS measurement method is implemented.

An embodiment of the present application further provides a chip module, where a computer program is stored on the chip module, and when the computer program is executed by the chip module, the above-mentioned GNSS measurement method is implemented.

It should be noted that the processor mentioned in the embodiments of the present application may be a central processing unit (central processing unit, CPU), and may also be other general-purpose processors, a digital signal processor (digital signal processor, DSP), an application specific integrated circuit (application specific integrated circuit, ASIC), a field programmable gate array (field programmable gate array, FPGA) or other programmable logic devices, discrete gates or transistor logic devices, discrete hardware components, etc. The general-purpose processor may be a microprocessor, or the processor may also be any conventional processor, etc.

It should be understood that the memory mentioned in the embodiments of the present application may be a volatile memory or a non-volatile memory, or may include both volatile and non-volatile memories. Here, the non-volatile memory may be a read-only memory (read-only memory, ROM), a programmable read-only memory (programmable read-only memory, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), which is used as an external cache. By way of example and not limitation, many forms of RAMs are available, such as static random access memory (static RAM, SRAM), dynamic random access memory (dynamic RAM, DRAM), synchronous dynamic random access memory (synchronous DRAM, SDRAM), double data rate synchronous dynamic random access memory (double data rate SDRAM, DDR SDRAM), enhanced synchronous dynamic random access memory (enhanced SDRAM, ESDRAM), synch link dynamic random access memory (synch link DRAM, SLDRAM), and direct ram bus random access memory (direct ram bus RAM, DR RAM). It should be noted that when the processor is the general-purpose processor, DSP, ASIC, FPGA, or other programmable logic devices, discrete gates or transistor logic devices, or discrete hardware components, the memory (storage module) is integrated in the processor. It should be noted that the memory described herein is intended to include but not limited to these and any other suitable types of memories.

It should be understood that in various embodiments of the present application, the magnitude of the sequence numbers of the above processes does not imply the order of execution, which should be determined by their functions and internal logic, and should not impose any limitation on the implementation process of the embodiments of the present application.

Regarding the modules/units included in the various apparatuses and products described in the above embodiments, they may be software modules/units, or hardware modules/units, or it may be that part of them are software modules/units and part of them are hardware modules/units. The apparatuses and products may be applied to or integrated into a chip, a chip module, or a terminal device. Exemplarily, for the apparatuses and products applied to or integrated into the chip, the modules/chips they contain may be implemented in a hardware manner such as circuits, or at least part of the modules/units may be implemented in the form of a software program that runs on a processor integrated in the chip, while the remaining part of the modules/units may be implemented in a hardware manner such as circuits.

In the present application, the term "include" and its variations may refer to non-restrictive inclusion; the term "or" and its variations may refer to "and/or". In the present application, terms such as "first", "second", etc., are used to distinguish similar objects, and are not necessarily used to describe a specific order or sequence. In the present application, "multiple" means two or more. "And/or" describes the association relationship of associated objects and indicates that three relationships may exist. For example, A and/or B may represent: A exists alone, A and B exist simultaneously, and B exists alone. The character "/" generally indicates that the associated objects before and after it have an "or" relationship.

The above are only some embodiments of the present application. It should be noted that for those of ordinary skill in the art, many improvements and refinements may further be made without departing from the principles of the present application, and these improvements and refinements should also be regarded as within the protection scope of the present application.

## Claims

1. A GNSS measurement method, comprising:
receiving a medium access control control element (MAC CE) sent by a network device; wherein the MAC CE is used to trigger a terminal device to perform GNSS measurement;
determining a time-domain starting position of a GNSS measurement gap according to a first-in-sequence effective time slot of the MAC CE, and performing GNSS measurement within the measurement gap.

2. The method according to claim 1, wherein the first-in-sequence effective time slot is determined according to a sending-ending time slot of a hybrid automatic repeat request acknowledgement (HARQ-ACK) corresponding to the MAC CE and an activation delay; wherein the activation delay is a pre-configured time delay value and/or a protocol-specified time delay value.

3. The method according to claim 2, wherein the first-in-sequence effective time slot is after the sending-ending time slot of the HARQ-ACK, and a time interval between the first-in-sequence effective time slot and the sending-ending time slot of the HARQ-ACK is equal to the activation delay.

4. The method according to any one of claims 1 to 3, wherein the time-domain starting position of the GNSS measurement gap is the first-in-sequence effective time slot corresponding to the MAC CE.

5. The method according to any one of claims 1 to 3, wherein the time-domain starting position of the GNSS measurement gap is determined according to the first-in-sequence effective time slot corresponding to the MAC CE and a pre-configured time offset.

6. The method according to claim 5, wherein the time-domain starting position of the GNSS measurement gap is after the first-in-sequence effective time slot corresponding to the MAC CE, and a time interval between the time-domain starting position of the GNSS measurement gap and the first-in-sequence effective time slot corresponding to the MAC CE is equal to the pre-configured time offset.

7. The method according to any one of claims 1 to 3, wherein the terminal device is further configured to receive configuration information sent by the network device, wherein the configuration information comprises parameters of the GNSS measurement gap.

8. The method according to claim 7, wherein the parameters of the GNSS measurement gap comprise a starting position of the measurement gap, a cycle size of the measurement gap, and a time length of the measurement gap.

9. The method according to claim 7 or 8, wherein the GNSS measurement gap is a first-in-sequence measurement gap whose starting position is not earlier than the first-in-sequence effective time slot corresponding to the MAC CE.

10. The method according to claim 7 or 8, wherein the GNSS measurement gap is a first-in-sequence measurement gap whose starting position is not earlier than the first-in-sequence effective time slot corresponding to the MAC CE plus a pre-configured time offset.

11. The method according to any one of claims 7 to 10, wherein the GNSS measurement gap is in an inactive state before the terminal device receives the MAC CE.

12. A GNSS measurement apparatus, comprising:
a receiving module, configured to receive a medium access control control element (MAC CE) sent by a network device; wherein the MAC CE is used to trigger a terminal device to perform GNSS measurement;
a measurement module, configured to determine a time-domain starting position of a GNSS measurement gap according to a first-in-sequence effective time slot of the MAC CE, and perform GNSS measurement within the measurement gap.

13. A GNSS measurement device, comprising: a processor and a memory; wherein
the memory stores computer execution instructions;
the processor executes the computer execution instructions stored in the memory to implement the method according to any one of claims 1 to 11.

14. A computer-readable storage medium, wherein computer execution instructions are stored in the computer-readable storage medium, and the computer execution instructions are used to implement the method according to any one of claims 1 to 11 when being executed.

15. A computer program product, comprising a computer program, wherein when the computer program is executed, the method according to any one of claims 1 to 11 is implemented.

16. A chip, wherein a computer program is stored on the chip, and when the computer program is executed by the chip, the method according to any one of claims 1 to 11 is implemented.
